(19) Europäisches Patentamt
European Patent Office
Office européen des brevets

(11) Veröffentlichungsnummer: **0 069 216**
**B1**

(12) **EUROPÄISCHE PATENTSCHRIFT**

(45) Veröffentlichungstag der Patentschrift: **27.03.85**

(51) Int. Cl.⁴: **C 07 F 7/18**, C 07 F 7/12, C 07 F 7/08, C 11 C 3/00

(21) Anmeldenummer: **82104063.1**

(22) Anmeldetag: **11.05.82**

(54) **Verfahren zur Silylierung ungesättigter natürlich vorkommender Öle oder deren Umesterungsprodukte.**

(30) Priorität: **08.07.81 DE 3126845**

(43) Veröffentlichungstag der Anmeldung: **12.01.83 Patentblatt 83/2**

(45) Bekanntmachung des Hinweises auf die Patenterteilung: **27.03.85 Patentblatt 85/13**

(84) Benannte Vertragsstaaten: **BE FR GB IT NL**

(56) Entgegenhaltungen:
**DE - A - 2 752 973**
**GB - A - 1 129 219**
**US - A - 2 721 873**
**US - A - 3 453 224**

**JOURNAL OF THE AMERICAN CHEMICAL SOCIETY, Band 69, Nr. 11, 4. Dezember 1947, Seite 2916; W.F. BRUCE et al.: "Pyridine Derivatives II. Some 6-Methyl-4-hydroxy-2-pyridones and their Derivatives".**

(73) Patentinhaber: **CHEMISCHE WERKE HÜLS AG, - RSP Patente / PB 15 - Postfach 13 20, D-4370 Marl 1 (DE)**

(72) Erfinder: **Kampf, Wolfgang, Dr., Im Wienäckern 60b, D-4358 Haltern (DE)**
Erfinder: **Streck, Roland, Dr., Leverkusener Strasse 12, D-4370 Marl (DE)**

**EP 0 069 216 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Es ist bekannt, ungesättigte natürlich vorkommende Öle für bestimmte Einsatzzwecke, z. B. als Härter in Bindemitteln auf Basis von Alkalisilikaten, mit reaktiven Silylgruppen zu versehen.

Wie in der DE-OS 2 752 973 angeführt ist, kann man zu diesem Zweck Hydrogensilane mit Ölsäureestern oder entsprechenden Estern der Linolsäure in Gegenwart eines Katalysators bei Temperaturen oberhalb 50° C umsetzen. Als Katalysatoren sollen dabei insbesondere Platin oder Chlorplatinsäure, Azoverbindungen, metallorganische Verbindungen sowie Peroxide infrage kommen. Zur Verbesserung der Umsätze wird nun in der DE-OS 2 752 973 vorgeschlagen, die eingesetzten Ölsäureester zunächst anzuhydrieren und danach das teilhydrierte Reaktionsprodukt in Gegenwart von organischen Peroxiden mit Hydrogensilanen umzusetzen.

Die Nachteile der Verfahren des Standes der Technik bestehen darin, daß einmal zum Teil recht teure Katalysatoren, und zum anderen darüber hinaus gegebenenfalls weitere Verfahrensstufen erforderlich sind.

Aufgabe der vorliegenden Erfindung war es daher, ein einfaches und wirtschaftliches Verfahren zur Herstellung von reaktive Silylgruppen tragenden ungesättigten natürlich vorkommenden Ölen oder deren Umesterungsprodukten zu entwickeln.

Diese Aufgabe wurde dadurch gelöst, daß man die ungesättigten natürlich vorkommenden Öle oder deren Umesterungsprodukte mit Siliciumverbindungen der allgemeinen Formel I

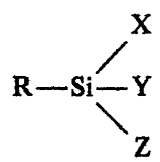

in der R ein ungesättigter aliphatischer Kohlenwasserstoffrest mit 2 bis 6 Kohlenstoffatomen und X ein hydrolysierbarer Rest sind, Y und Z unabhängig voneinander gleich X, ein Alkylrest mit 1 bis 8 Kohlenstoffatomen, ein Cycloalkylrest mit 5 bis 12 Kohlenstoffatomen oder ein gegebenenfalls substituierter Phenylrest sein können, bei einer Temperatur von 200 bis 350° C unter Inertgas umsetzt.

Als ungesättigte natürlich vorkommende Öle oder deren Umesterungsprodukte werden beim erfindungsgemäßen Verfahren in erster Linie die Ester eingesetzt, die sich von der Ölsäure, der Linolsäure und der Linolensäure ableiten. Solche Ester befinden sich in vielen pflanzlichen und tierischen Ölen, wie z. B. Olivenöl, Erdnußöl, Sesamöl, Maiskeimöl, Sonnenblumenöl, Mohnöl, Baumwollsaatöl, Sojaöl, Leinöl, Rüböl, Fischöl und Walöl. Sofern es angebracht erscheint, die Öle nicht in Form ihrer Triglyceride einzusetzen, so kann vor der Umsetzung mit der Siliciumverbindung eine Umesterung mit anderen Alkoholen, vorzugsweise einwertigen, wie z. B. Methanol, durchgeführt werden [Ullmanns Encyklopädie der technischen Chemie, 7. Band, (1956), Seite 526].

Erfindungsgemäß werden die reaktiven Silylgruppen durch Umsetzung mit einer Siliciumverbindung der allgemeinen Formel I in das ungesättigte natürlich vorkommende Öl eingeführt. In dieser allgemeinen Formel I steht R für einen ungesättigten aliphatischen Kohlenwasserstoffrest mit 2 bis 6, vorzugsweise 2 bis 4 Kohlenstoffatomen, und X für einen hydrolysierbaren Rest, wie z. B. Halogen, vorzugsweise Chlor und Brom, Alkoxyl, vorzugsweise mit bis zu 4 Kohlenstoffatomen, Aroxyl, vorzugsweise mit 6 bis 12 Kohlenstoffatomen, Carboxylat, vorzugsweise mit bis zu 8 Kohlenstoffatomen, Ketoximat, vorzugsweise mit bis zu 6 Kohlenstoffatomen in der Ketogruppe, oder Amid, vorzugsweise mit bis zu 12 Kohlenstoffatomen. Y und Z können unabhängig voneinander gleich X sein, daneben aber auch ein Alkylrest mit 1 bis 8 Kohlenstoffatomen, ein Cycloalkylrest mit 5 bis 12 Kohlenstoffatomen oder ein gegebenenfalls substituierter Phenylrest.

Typische Vertreter der ungesättigten Organosilane sind beispielsweise Vinyltrichlorsilan, Vinyltrimethoxysilan, Vinyltriethoxysilan, Vinyltris(methoxyethoxy)silan, Vinylmethyldimethoxysilan, Vinyldimethylchlorsilan, Allylmethylbutylchlorsilan, Allylethyldibromsilan, Allyldimethylacetoxysilan, Allyltriisopropoxysilan, Allylphenyldiphenoxysilan, Methallylbutylchlorbromsilan, Crotylmethylpropyljodsilan und Vinyl-dimethylketoimatomethoxychlorsilan.

Bevorzugt sind Vinyl- und Allylsilane mit Halogenatomen oder Alkoxygruppen als hydrolysierbaren Resten X, z. B. Vinyltrichlorsilan, Vinylmethyldichlorsilan, Vinylmethylethylchlorsilan, Vinyltrimethoxysilan, Vinyltriethoxysilan, Vinylmethyldimethoxysilan, Allyltribromsilan und Allylethylmethoxy-propoxy-silan.

Unter den ungesättigten Halogensilanen sind wiederum die mit Chlor als Halogen bevorzugt, so daß beispielsweise Vinyltrichlorsilan, Vinylmethyldichlorsilan, Vinyldimethylchlorsilan und Allyltrichlorsilan besonders bevorzugte Vertreter darstellen.

Die mögliche Umwandlung der mit diesen Verbindungen eingebrachten Chlorsilyl-Gruppen in andere reaktive Silyl-Gruppen kann beispielsweise im Laufe der Aufarbeitung z. B. durch Zugabe von vorzugsweise Alkoholen, Trialkylorthoformiaten, Epoxyden, Natriumacetat usw. nach bekannten Reaktionen des Standes der Technik erfolgen.

Aus der Verbindungsklasse der ungesättigten Alkoxysilane sind diejenigen mit Alkoxyresten von 1

bis 4 Kohlenstoffatomen besonders vorteilhaft, so daß Vinyltrimethoxysilan, Vinyltriethoxysilan, Vinylmethoxy-diethoxy-silan, Vinylmethylmethoxy-propoxy-silan, Allylpropylpropoxybutoxysilan als bevorzugte Vertreter gelten. Ganz besonders bevorzugt ist die Verwendung von Vinyltrimethoxysilan.

Bei der Verwendung dieser ungesättigten Alkoxysilane ergibt sich der Vorteil, daß eine Aufarbeitung der Anlagerungsprodukte praktisch unterbleiben oder sich allenfalls auf das Abdestillieren anwesender Reste von unumgesetztem Alkenylalkoxysilan beschränken kann.

Die Anlagerungsreaktion zwischen den ungesättigten natürlich vorkommenden Ölen bzw. deren Umesterungsprodukten und den ungesättigten Siliciumverbindungen der allgemeinen Formel I wird durch Erhitzen der Reaktanden auf Temperaturen von 200 bis 350° C, vorzugsweise von 250 bis 330° C, unter Inertgas durchgeführt. Das ungesättigte Silan wird zweckmäßigerweise im molaren Überschuß eingesetzt. Verhältnisse von Silan zu Öl im Verhältnis 1 bis 15 : 1, vorzugsweise 2 bis 10 : 1, sind üblich. Die Reaktionszeiten betragen je nach gewählter Reaktionstemperatur 2 bis 20 Stunden, vorzugsweise 5 bis 15 Stunden.

Für die Anlagerung ist erhöhter Druck nur insofern erforderlich, als der Dampfdruck des angelagerten ungesättigten Silans bei der gewählten Reaktionstemperatur $>$ 1 bar beträgt. Die Anlagerung des ungesättigten Silans an das ungesättigte natürlich vorkommende Öl bzw. dessen Umesterungsprodukt kann auch in Gegenwart eines organischen Lösemittels durchgeführt werden. In diesem Falle ist dafür Sorge zu tragen, daß die Apparatur für den sich gegebenenfalls aufbauenden Druck ausgelegt ist.

Die Aufarbeitung der nach dem erfindungsgemäßen Verfahren hergestellten Anlagerungsprodukte erfolgt in der Regel durch Abziehen von nichtumgesetztem Silan und gegebenenfalls vorhandenem Lösemittel im Vakuum.

Die angelagerte Menge an ungesättigtem Silan und damit die Anzahl der im Anlagerungsprodukt durchschnittlich vorhandenen reaktiven Silylgruppen läßt sich über die Menge des angebotenen Silans einstellen. Sie richtet sich in erster Linie nach dem speziellen Verwendungszweck des Anlagerungsproduktes. Im allgemeinen werden nach dem erfindungsgemäßen Verfahren Anlagerungsprodukte mit 3 bis 15 Gewichtsprozent, vorzugsweise 6 bis 12 Gewichtsprozent, Silicium hergestellt.

Die nach dem erfindungsgemäßen Verfahren hergestellten Anlagerungsprodukte können z. B. Verwendung finden als Zusätze zur Verbesserung der Eigenschaften von Klebstoffen, Kitten, Dichtungs- und Spachtelmassen, als Mittel zur Dispergierung von Pigmenten, Hydrophobierung und Substraten wie Papier, Textilien, Holz, Karton und Baustoffen sowie zur Bodenverfestigung.

Alle Prozentangaben — auch in den nachfolgenden Beispielen, die die vorliegende Erfindung erläutern — sind, sofern nicht anders angegeben, Gewichtsprozente.

Als Test auf den Einbau des analytisch gefundenen Siliciums in das native Öl wird die Vernetzbarkeit durch Wasser bestimmt. Dazu werden jeweils 2,0 g des Produktes in 40 ml Hexan gelöst, 1,0 ml einer 5%igen Lösung von Dibutylzinndilaurat in Hexan zugesetzt und die Lösung auf Wasser in einer Schale (Oberfläche 600 $cm^2$) gegossen. Nach 24stündigem Stehen bei Raumtemperatur hat sich ein fester Polymerfilm gebildet, dessen bei Raumtemperatur (25° C) in Toluol unlösliche Anteile nach vorhergehendem Trocknen bestimmt werden.

## Beispiel 1

100 g Leinöl (Viskosität 46,7 mPa s, Jodzahl 180) wurden im Autoklaven unter Stickstoffatmosphäre zusammen mit 200 g Vinyltrimethoxysilan (VTMOS) 15 Stunden bei 260° C gehalten. Während dieser Zeit wurde das Gemisch gerührt. Die Silanmenge entsprach bei vollständiger Anlagerung an das Öl einem Si-Gehalt des Produktes von 12,65% Si. Es resultierte nach anschließender einstündiger Vakuumbehandlung bei 130° C ein Öl mit 9,6% Si. Somit waren vom eingesetzten Silan 76% im Produkt enthalten.

Die Jodzahl, gemessen in Anlehnung an DIN 53 241, Blatt 1, betrug 96, die Viskosität 208 mPa s (20° C) und der Gelgehalt $<$ 2%. Nach dem Vernetzungstest hatte das Produkt 92% unlösliche Anteile.

## Beispiele 2 bis 5

125 g Leinöl mit den Kenndaten von Beispiel 1 wurden bei 270° C unter Stickstoffatmosphäre zusammen mit 175 g Vinyltrimethoxysilan verschiedene Zeiten im Autoklaven gehalten. Die Ergebnisse enthält Tabelle 1.

Tabelle 1

| Beispiel | Zeit [h] | Si [%] | Umsetzung [%] | Gel [%] | Viskosität [mPa s] |
|---|---|---|---|---|---|
| 2 | 3 | 6,0 | 52,8 | 50 | 140 |
| 3 | 5 | 7,0 | 63,1 | 77 | 151 |
| 4 | 10 | 8,8 | 79,8 | 85 | 307 |
| 5 | 15 | 10,7 | 84,7 | 91 | 338 |

Die Werte der Spalte »Umsetzung« beziehen sich auf gefundenes zu eingesetztem Silicium.

Beispiele 6 bis 16

Die Umsetzung von Vinyltrimethoxysilan mit Leinöl wurde bei unterschiedlichen Temperaturen durchgeführt. Die Ergebnisse sind in Tabelle 2 aufgeführt.

Tabelle 2

| Beispiel | T [°C] | t [h] | VTMOS [g] | Leinöl [g] | Si [%] | Umsetzung [%] | Gel [%] | Viskosität [mPa s] |
|---|---|---|---|---|---|---|---|---|
| 6 | 250 | 15 | 100 | 200 | 2,9 | 45,5 | 73 | 301 |
| 7 | 260 | 15 | 125 | 175 | 5,1 | 64,4 | 67 | 2530 |
| 8 | 260 | 15 | 150 | 150 | 6,4 | 67,6 | 76 | 763 |
| 9 | 260 | 15 | 175 | 125 | 8,2 | 74,2 | 89 | 316 |
| 10 | 260 | 15 | 200 | 100 | 9,6 | 76,0 | 92 | 208 |
| 11 | 270 | 15 | 150 | 150 | 8,1 | 84,9 | 81 | 930 |
| 12 | 280 | 5 | 200 | 100 | 10,6 | 84,0 | 83 | 158 |
| 13 | 290 | 5 | 200 | 100 | 10,2 | 80,7 | 87 | 205 |
| 14 | 300 | 5 | 200 | 100 | 10,9 | 86,2 | 88 | 333 |
| 15 | 310 | 5 | 200 | 100 | 10,6 | 83,8 | 85 | 267 |
| 16 | 320 | 5 | 200 | 100 | 11,1 | 87,7 | 87 | 418 |

Versuche, bei denen der Stabilisator tert.-Butylbrenzcatechin (1000 ppm) zur Verhinderung einer Eigenreaktion der Si-Verbindung zugegeben worden war, ergaben keine anderen Versuchsergebnisse.

Beispiele 17 bis 25

Anstelle von Leinöl wurden andere Öle mit Vinyltrimethoxysilan umgesetzt. So wurde ein Pflanzenöl (Jodzahl 115; Viskosität 70,5 mPa s bei 20°C; 3,83 cis-ständige Doppelbindungen pro Molekül), ein Sonnenblumenöl (Jodzahl 135; Viskosität 60,2 mPa s bei 20°C; 4,73 cis-ständige Doppelbindungen pro Molekül) und ein Sojaöl (Jodzahl 133; Viskosität 59,7 mPa s bei 20°C) verwendet. Die Ergebnisse enthält Tabelle 3.

Tabelle 3

| Beispiel | Öltyp | T [°C] | t [h] | Gewichtsverhältnis Öl : Si | Si [%] | Umsetzung [%] | Gel [%] | Viskosität [mPa s] |
|---|---|---|---|---|---|---|---|---|
| 17 | Pflanzenöl | 250 | 15 | 1 : 2 | 6,9 | 53,0 | 65 | 104 |
| 18 | Pflanzenöl | 280 | 3 | 5 : 7 | 7,6 | 54,3 | 78 | 142 |
| 19 | Pflanzenöl | 290 | 3 | 1 : 2 | 9,2 | 72,8 | 63 | 171 |
| 20 | Sonnenblumenöl | 250 | 12 | 1 : 2 | 6,5 | 51,4 | 54 | 115 |
| 21 | Sonnenblumenöl | 260 | 10 | 1 : 2 | 7,7 | 61,0 | 72 | 99 |
| 22 | Sojaöl | 250 | 3 | 1 : 2 | 2,8 | 22,2 | 31 | 64,4 |
| 23 | Sojaöl | 270 | 3 | 1 : 2 | 5,2 | 41,1 | 48 | 72,3 |
| 24 | Sojaöl | 270 | 5 | 1 : 2 | 7,7 | 61,0 | 68 | 78,8 |
| 25 | Sojaöl | 290 | 5 | 1 : 2 | 10,1 | 79,8 | 83 | 113 |

## Beispiele 26 bis 29

Als ungesättigte Substanzen kamen Ölsäuremethylester (Viskosität 6,26 mPa s bei 20° C) sowie Ölsäuretriglycerid (Viskosität 83,1 mPa s bei 20° C) zum Einsatz. Die Ergebnisse sind in Tabelle 4 zusammengestellt.

Tabelle 4

| Beispiel | Unges. Verb. | T [°C] | t [h] | Gewichtsverhältnis unges. Verbr. : Si | Si [%] | Umsetzung [%] | Gel [%] | Viskosität [mPa s] |
|---|---|---|---|---|---|---|---|---|
| 26 | Ö | 270 | 5 | 1 : 2 | 4,9 | 38,8 | 68 | 11,2 |
| 27 | Ö | 300 | 5 | 1 : 2 | 11,0 | 87,0 | 75 | 14,9 |
| 28 | Ötr | 250 | 8 | 1 : 2 | 6,6 | 52,2 | 50 | 96,6 |
| 29 | Ötr | 260 | 5 | 1 : 2 | 6,6 | 52,2 | 52 | 385 |

Ö = Ölsäuremethylester
Ötr = Ölsäuretriglycerid

## Beispiel 30

Als anzulagernde Si-Verbindung wurde Vinyltrichlorsilan verwendet. 150 g des Pflanzenöls der Beispiele 17 bis 19 wurden mit 150 g dieser Si-Verbindung 5 Stunden unter Rühren und Inertgasatmosphäre bei 225° C gehalten. Nach dem Abziehen überflüssigen Vinyltrichlorsilans im Vakuum wurde ein Öl mit 6,1% Si (70,3% Umsetzung) und einer Viskosität von 212 mPa s (20° C) erhalten. Der Gelwert nach dem Vernetzungstest lag bei 89%.

**Patentansprüche**

1. Verfahren zur Silylierung ungesättigter natürlich vorkommender Öle oder deren Umesterungsprodukte, dadurch gekennzeichnet, daß man die ungesättigten natürlich vorkommenden Öle oder deren Umesterungsprodukte mit Siliciumverbindungen der allgemeinen Formel I

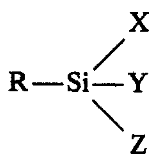

in der R ein ungesättigter aliphatischer Kohlenwasserstoffrest mit 2 bis 6 Kohlenstoffatomen und X ein hydrolysierbarer Rest sind, Y und Z unabhängig voneinander gleich X, ein Alkylrest mit 1 bis 8 Kohlenstoffatomen, ein Cycloalkylrest mit 5 bis 12 Kohlenstoffatomen oder ein gegebenenfalls substituierter Phenylrest sein können, bei einer Temperatur von 200 bsi 350° C unter Inertgas umsetzt.

2. Verfahren nach Anspruch 1, dadurch gekennzeichnet, daß in der Siliciumverbindung der allgemeinen Formel I Y und Z gleich X sind und X gleich Chlor oder Alkoxy mit bis zu 4 Kohlenstoffatomen ist.

3. Verfahren nach den Ansprüchen 1 und 2, dadurch gekennzeichnet, daß man die Silylierung bei einer Temperatur von 250 bis 330° C durchführt.

**Claims**

1. A process for the silylation of an unsaturated, naturally occurring oil or its transesterification product, characterised in that the unsaturated, naturally occurring oil or transesterification product is reacted at a temperatur of 200 to 350° C in an inert gas atmosphere with a silicon compound of the general formula

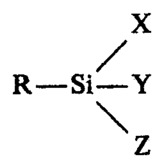

(I)

where R is an unsaturated aliphatic hydrocarbon radical of 2 to 6 carbon atoms, X is a hydrolysable radical and Y and Z independently of one another are identical to X or can denote alkyl of 1 to 8 carbon atoms, cycloalkyl of 5 to 12 carbon atoms or optionally substituted phenyl.

2. A process according to claim 1, characterised in that in the formula I for the silicon compound Y and Z are identical to X and X is chlorine or alkoxy of up to 4 carbon atoms.

3. A process according to claim 1 or 2, characterised in that the silylation is carried out at a temperature of 250 to 330° C.

**Revendications**

1. Procédé de silylation d'huiles insaturées de provenance naturelle ou de leurs produits de trans-estérification, caractérisé par le fait que l'on fait réagir sous gaz inerte, à une température de 200 à 350° C, les huiles insaturées de provenance naturelle ou leurs produits de trans-estérification sur des composés de silicium de formule générale I:

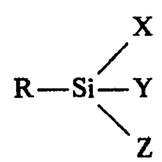

(I)

dans laquelle R est un radical hydrocarbure aliphatique insaturé comportant de 2 à 6 atomes de carbone et X est un radical hydrolysable, Y et Z peuvent être, indépendamment l'un de l'autre, la même chose que X, un radical alkyle comportant de 1 à 8 atomes de carbone, un radical cyclo-aklyle comportant de 5 à 12 atomes de carbone ou un radical phényle éventuellement substitué.

2. Procédé selon la revendication 1, caractérisé par le fait que dans le composé de silicium de la formule générale (I), Y et Z sont semblables à X et X représente un atome de chlore ou un groupe alcoxyle contenant jusqu'à 4 atomes de carbone.

3. Procédé selon les revendications 1 et 2, caractérisé par le fait que l'on effectue la silylation à une température de 250 à 330° C.